# EUROPÄISCHE PATENTSCHRIFT

(11) **EP 2 821 730 B1**
(45) Veröffentlichungstag und Bekanntmachung des Hinweises auf die Patenterteilung: **17.08.2016**
(21) Anmeldenummer: 14171302.4
(22) Anmeldetag: 05.06.2014
(51) Int. Cl.: F24H 9/12, B01D 35/02, B01D 29/00, E03B 7/07, A47L 15/42, F24D 3/10, D06F 39/10

(54) **Anschlussstück sowie Montagesatz**
Connecting piece and assembly set
Pièce de raccordement et ensemble de montage

(30) Priorität: 14.06.2013 DE 102013211188
(43) Veröffentlichungstag der Anmeldung: 07.01.2015
(73) Patentinhaber: BSH Hausgeräte GmbH, 81739 München (DE)
(72) Erfinder: Bauer, Franz, 83374 Traunwalchen (DE); Kuhar, Marijo, 83301 Traunreut (DE)

(56) Entgegenhaltungen:
- DE-A1- 3 618 738
- DE-U1-202005 008 766
- US-A1- 2008 314 466
- US-B1- 6 402 962

## Beschreibung

Die Erfindung betrifft zunächst ein Anschlussstück zum Verbinden eines Haushaltsgerätes, insbesondere eines Durchlauferhitzers, mit einem ein Fluid führenden Wandnippel, wobei das Anschlussstück einen Ein- und Auslassstutzen aufweist, die durch einen Mittelabschnitt mit einem Absperrorgan, insbesondere einem Kugelventil, verbunden sind, wobei das Anschlussstück mittels des Einlassstutzens auf den Wandnippel aufschraubbar ist und ein Flansch eines Zulaufrohrs des Haushaltgerätes mittels einer auf den Auslassstutzen aufschraubbaren Überwurfmutter mit diesem verbindbar ist.

Darüber hinaus betrifft die Erfindung einen Montagesatz für ein Haushaltsgerät, insbesondere einen Durchlauferhitzer, umfassend mindestens ein Anschlussstück sowie weitere zur Installation des Anschlussstücks benötigte Komponenten.

Haushaltsgeräte, wie z. B. Durchlauferhitzer, Warmwasserspeicher oder dergleichen, werden üblicherweise mit Hilfe von Anschlussstücken an Wandauslässe des häuslichen Kaltwassernetzes angeschlossen. Um eine zuverlässige Funktion und einen wartungsarmen Betrieb des Durchlauferhitzers zu gewährleisten, werden vielfach Siebe und Durchflussbegrenzer in der Kaltwasserzuführung angeordnet. Durch den Durchflussbegrenzer wird eine Anpassung an den örtlich herrschenden Wasserdruck vorgenommen, wohingegen das Sieb eine Kontamination des Durchlauferhitzers mit Fremdkörpern und hierdurch bedingte Fehlfunktionen verhindert.

Bei gängigen Durchlauferhitzern sind Sieb und Durchflussbegrenzer vielfach an unterschiedlichen Positionen innerhalb des Durchlauferhitzers verbaut, wodurch sich unter anderem der Wartungsaufwand erhöht. Darüber hinaus kommt dort ein Metalltopfsieb mit einem angespritzten, ringförmigen Kunststoffflansch zum Einsatz, was zu verhältnismäßig hohen Herstellungskosten führt. Ferner verfügen Anschlussstücke für den Anschluss von Durchlauferhitzern an das häusliche Kaltwassernetz im Allgemeinen über ein Absperrorgan, wie zum Beispiel einen Kugelhahn oder dergleichen, der das das Auswechseln des Durchflussbegrenzers bei vollem Kaltwasserdruck erlaubt und das aufwändige Absperren des Hausanschlusses entbehrlich macht.

Die Druckschrift US 2008/0314466 A1 offenbart Ventile zum Gebrauch mit Durchlauferhitzern. Dieses Dokument offenbart den Oberbegriff des Anspruchs 1.

Aus der DE 199 19 910 B4 ist weiterhin eine Vorrichtung mit zumindest einem Fluidkanal bekannt.

Bei dieser Vorrichtung ist zwischen einem Zulauf und einem Ablauf für das Fluid ein quer abzweigender Stutzen vorgesehen, in dem ein im Wesentlichen hohlzylindrisches Sieb aufgenommen ist. Dieses Sieb ist aus Polyoxymethylen (POM) hergestellt und verfügt über eine seitliche Aufnahme, in die ein Durchflussbegrenzer einsetzbar ist und die mittels eines verschwenkbar am Sieb angelenkten Deckels nach dem Einsetzen des Durchflussbegrenzers verschließbar ist. Das Sieb und der Deckel sind integral im Spritzgussverfahren aus einem Kunststoffmaterial gefertigt, wobei sich das Sieb nur in der ordnungsgemäßen Montagelage in den Querstutzen einsetzen und fixieren lässt, wobei der Querstutzen zugleich durch das Sieb nach oben hin abgedichtet wird.

Die Fertigung des Siebes mit dem integral angespritzten, gelenkigen Deckel als auch der nur im Gieß- oder Sinterverfahren verfahren herstellbare Fluidkanal-Vorrichtung gestaltet sich jedoch aufwändig und kostenintensiv.

Aus der DE 43 26 352 C2 ist eine weitere Fluid-Kanalvorrichtung für den Wasseranschluss von Haushaltsgeräten bekannt, bei der ein Sieb und ein Drosselgerät durch einen Stopfen längs einer Strömungsrichtung des Fluids in der Funktionslage im Fluidkanal gehalten sind.

Ein Wasserablauf verläuft hierbei in einem rechten Winkel zu einem Wasserzulauf und mit Hilfe eines walzenförmigen Absperrgliedes lässt sich der Wasserzulauf verschließen, wodurch Wartungsarbeiten vereinfacht werden. Der Durchflussbegrenzer ist zwischen dem Sieb und einem näherungsweise topfförmigen Stopfen aufgenommen, wobei der Stopfen in die Wandung des Wasserkanals eingeschraubt und gegen diese mit einem O-Ring abgedichtet ist. Das Sieb ist seinerseits mittels einer Schnapp- bzw. Rastverbindung mit einem unteren Endabschnitt des Stopfens verbunden und in Strömungsrichtung im Wasserkanal angeordnet. Das Sieb, der Durchflussbegrenzer sowie der Stopfen sind jeweils mit einem geeigneten Kunststoffmaterial gefertigt. Ein mit einer Kappe verschließbarer Querstutzen erweitert die Anwendungsmöglichkeiten und kann z. B. als ein Zulauf für eine Unterbauarmatur verwendet werden.

Ein Nachteil dieser vorbekannten Fluid-Kanalvorrichtung liegt in der aufwändigen räumlichen Gestaltung, die nur durch Gießen oder Sintern herstellbar ist, woraus sich vergleichsweise hohe Fertigungskosten ergeben. Ferner ist eine zusätzliche, die Fertigungskosten erhöhende Gehäuseöffnung für die Integration des Siebes und des Durchflussbegrenzers vorzusehen, die darüber hinaus durch einen Stopfen mit einem O-Ring aus einem Polymer abgedichtet werden muss.

Aufgabe der Erfindung ist es zunächst, ein leicht zu installierendes und zu wartendes Anschlussstück mit einem weitgehend leckstromfreien Durchflussbegrenzer zum Anschluss eines Haushaltsgerätes an einen fluidabgebenden Wandauslass anzugeben. Ferner ist es eine Aufgabe der Erfindung, einen fertigungstechnisch leicht herzustellenden Montagesatz, der das Anschlussstück nebst weiteren Komponenten enthält, zur besonders einfachen Installation des Anschlussstücks zu schaffen.

Diese Aufgabe wird zunächst durch ein Anschlussstück mit den Merkmalen des Patentanspruchs 1 gelöst.

Dadurch, dass in einem Sitz des Auslassstutzens ein Sieb und ein Durchflussbegrenzer aufgenommen sind, wobei das Sieb durch mindestens zwei Rastzungen mit dem Sitz des Auslassstutzens verrastet ist und zwischen dem Flansch und einer Stirnfläche des Auslassstutzens ein Dichtring angeordnet ist, sind alle wesentlichen Bestandteile des Anschlussstücks, insbesondere das Sieb, der Durchflussbegrenzer sowie der Dichtring, stromabwärts hinter dem Absperrorgan im Bereich des Auslassstutzens räumlich kompakt zusammengefasst. Durch die Rastzungen ist das Sieb unverlierbar bzw. verliersicher im Sitz des Auslassstutzens aufgenommen und kann daher herstellerseitig in das Anschlussstück eingesetzt (montiert) und mit diesem zusammen als Einheit (s. g. Installations-Kit) ausgeliefert werden. Der Einlassstutzen, der Auslassstutzen sowie das Absperrorgan weisen jeweils eine näherungsweise rohrförmige Geometrie für den Durchtritt des Fluids auf und sind jeweils zentrisch zu einer Längsmittelachse ausgebildet, d. h. die genannten Bestandteile bilden bei zumindest vollständig geöffnetem Absperrorgan einen durchgehenden, hohlzylindrischen Fluidkanal mit einem idealerweise konstanten Innendurchmesser. Dadurch, dass alle Bestandteile zentrisch zur Längsmittelachse verlaufend angeordnet sind, kann das erfindungsgemäße Anschlussstück auch bei beengten Bauraumverhältnissen platzsparend in einen Durchlauferhitzer integriert werden.

Nach Maßgabe einer vorteilhaften Weiterbildung der Vorrichtung ist vorgesehen, dass das Sieb mit einem thermoplastischen Kunststoffmaterial, insbesondere mit Polyoxymethylen, gebildet sind. Hierdurch ist im Vergleich zu einem Metallsieb mit einem integral angespritzten Kunststoffflansch eine besonders kostengünstige Herstellung des Siebes möglich.

Gemäß einer günstigen Ausgestaltung ist der Dichtring mit einem bei Fluidkontakt aufquellenden Papierdichtungsmaterial und/oder mit einem Kunststoffmaterial gebildet. Durch den bevorzugt quellfähigen, z. B. aus Centellen^{®} gebildeten, Dichtring ist - unabhängig vom Anzugsmoment eines Anwenders - stets eine ausreichende Abdichtungswirkung gegeben, so dass insbesondere keine Leckströme im Bereich des Durchflussbegrenzers auftreten. Alternativ kann auch ein mit einem Kunststoffmaterial, vorzugsweise mit einer hinreichend elastischen Gummimischung, gebildeter Dichtring eingesetzt werden.

Bei einer weiteren vorteilhaften Weiterbildung ist der Sitz im Auslassstutzen näherungsweise zylindrisch ausgebildet und weist eine Ringnut auf, in die die mindestens zwei radial nach außen abgespreizten Rastzungen des Siebes zumindest bereichsweise formschlüssig einbringbar sind. Hierdurch ist das Sieb fest rastend bzw. unverlierbar im Sitz des Auslassstutzens aufgenommen, so dass es bei der Montage nicht verloren gehen kann. Durch die Rastzungen ist zudem gewährleistet, dass das Sieb von einem Anwender nur lagerichtig in den Sitz des Auslassstutzens eingesetzt werden kann und Montagefehler zuverlässig vermieden werden (s. g. Montagefehlerschutz). Der Sitz lässt sich fertigungstechnisch einfach und zudem kostenoptimal durch eine Bohrung realisieren.

Im Fall einer günstigen technischen Ausgestaltung ist eine Gesamtlänge von Sieb und Durchflussbegrenzer kleiner oder gleich einer Tiefe des Sitzes im Auslassstutzen. Hierdurch lassen sich der Dichtring, der Durchflussbegrenzer und das Sieb mittels der Überwurfmutter in axialer Richtung gegeneinander im Sitz des Auslassstutzens mechanisch verspannen. Bei einem mit Centellen^{®} gebildeten Dichtring oder einem Papierdichtring wird die Verspannung durch Aufquellen bei Fluidkontakt erreicht.

Nach Maßgabe einer günstigen Fortentwicklung weist das Sieb einen fluiddichten und im Wesentlichen hohlzylindrischen Mantel auf, an dessen ersten in Richtung des Absperrorgans weisenden Endabschnitt ein Quersteg ausgebildet ist. Infolge des rohrförmigen Mantels bzw. der hohlzylindrischen Wandung ist eine verlässliche Lagerung des Siebes im Sitz des Auslassstutzens gegeben. Zwischen dem rohrförmigen Mantel und dem Sitz im Auslassstutzen ist vorzugsweise eine Spielpassung vorgesehen. Der Quersteg erstreckt sich bevorzugt über den vollen (Innen-)Durchmesser des Mantels quer zu dessen Längsachse bzw. der Längsmittelachse des Anschlussstücks.

Gemäß einer weiteren Ausgestaltung ist der Durchflussbegrenzer näherungsweise scheibenförmig ausgebildet und weist einen umlaufenden Rezess auf, der in Richtung des Absperrorgans weist. Hierdurch ist eine Zentrierung des Durchflussbegrenzers gegeben.

Bei einer Weiterbildung ist der Rezess des Durchflussbegrenzers auf einem zweiten Endabschnitt des Siebes zumindest bereichsweise formschlüssig aufgenommen. Hierdurch wird der Durchflussbegrenzer zentriert und ist zugleich bei noch nicht aufgeschraubter Überwurfmutter verlässlich am Sieb festgehalten. Ggfls. kann zwischen dem Durchflussbegrenzer und dem Sieb eine leichte Presspassung und/oder eine Verrastung vorgesehen sein, um die Zuverlässigkeit des Sitzes noch zu erhöhen. Dennoch lässt sich der Durchflussbegrenzer leicht z. B. gegen einen anderen Durchflussbegrenzer mit einem höheren oder kleineren Durchflusswert austauschen. Alternativ kann bereits werksseitig ein für einen spezifischen Typ eines Durchlauferhitzers mit einer bestimmten Leistungszahl geeigneter Durchflussbegrenzer in das Sieb eingesetzt sein, wobei der Anwender auf den voreingestellten Durchflusswert optisch, z. B. über die Farbe, hingewiesen wird.

Gemäß einer Weiterentwicklung ist am Quersteg des Siebes mittig ein Vorsprung mit einer rechteckförmigen Querschnittsgeometrie ausgebildet. Hierdurch lässt sich das Sieb zu Reinigungszwecken z. B. einfach mittels einer Spitzzange oder dergleichen ergreifen und aus dem Auslassstutzen entgegen der Rastwirkung der Rastzungen herausnehmen.

Bei einer weiteren technisch vorteilhaften Ausgestaltung weist eine Wirkfläche des Siebes zwei V-förmig zueinander angeordnete Siebflächen auf, die von diametral gegenüberliegenden Abschnitten des ersten Endabschnitts des Mantels ausgehen und die in einer gemeinsamen Scheitellinie im Bereich des Querstegs zusammen laufen. Hierdurch wird die Wirkfläche der Siebfläche vergrößert und die Filterwirkung optimiert. Abgesehen von der hier lediglich exemplarisch genannten, V-förmigen bzw. satteldachförmigen Ausgestaltung der Wirkfläche des Siebes, kann diese jede beliebige dreidimensionale Geometrie aufweisen. Beispielsweise kann die räumliche Gestaltung der Wirkfläche des Siebes auch der einer einmal um ihre Hochachse rotierten Parabel entsprechen.

Darüber hinaus wird die erfindungsgemäße Aufgabe durch einen Montagesatz nach Maßgabe des Patentanspruchs 11 gelöst, wonach das mindestens eine Anschlussstück in einer dem Haushaltsgerät beiliegenden Verpackung, insbesondere einem transparenten Folienbeutel, enthalten ist, und im Bereich einer Außenseite der Verpackung mindestens eine Zusatzverpackung, insbesondere mindestens ein Aufkleber, zur Lagefixierung mindestens eines Durchflussbegrenzers für das Anschlussstück an der Verpackung vorgesehen ist. Hierdurch kann der, z. B. von einem externen Zulieferer bezogene (Basis-)Montagesatz, der im Rahmen der Fließbandfertigung eines Durchlauferhitzers diesem jeweils beigelegt wird, einfach und schnell nachträglich mit mindestens einem geeigneten Durchflussbegrenzer versehen werden. Zu diesem Zweck wird dem (Basis-)Montagesatz ggfls. mindestens ein Durchflussbegrenzer beigefügt, indem bevorzugt mittels des Aufklebers mindestens ein Durchflussbegrenzer außenseitig auf den Folienbeutel des (Basis-) Montagesatzes aufgeklebt oder auf andere Art und Weise an diesem befestigt wird. Das optionale außenseitige Anbringen des zu diesem Zweck zumindest bereichsweise transparenten und rückseitig bzw. einseitig adhäsiven Aufklebers auf den Folienbeutel des Montagesatzes ist leicht und kostengünstig in den Produktionsablauf einer bereits vorhandenen Fertigungslinie zu integrieren.

Um betriebsbedingte Probleme zu eliminieren, kann der Installateur aus den in der Zusatzverpackung enthaltenen Durchflussbegrenzern mit unterschiedlicher Durchflussmenge wählen und den jeweils geeigneten in das Anschlussstück einsetzen.

Die beigefügten Durchflussbegrenzer sind darüber hinaus farbcodiert, um die Auswahl für den Installateur zu erleichtern. Beispielsweise ist ein Durchflussbegrenzer für eine elektrische Heizleistung eines zu installierenden Durchlauferhitzers von 24 kW in der Farbe Rot codiert, während ein Durchflussbegrenzer für 12 kW in der Farbe Orange codiert ist. Weitere in der Praxis auftretende Zwischenleistungen von 18 kW und 21 kW können z. B. in olivgrün und weiß verschlüsselt sein. Um dem Installateur die Handhabung des Montagesatzes bzw. die hydraulische Verbindung des Haushaltsgeräts mit dem Wandnippel mit Hilfe des Anschlussstücks weiter zu erleichtern, sind die Verpackung und/oder der Aufkleber mit schriftlichen Montagehinweisen bzw. Text und/oder mit allgemeinverständlichen Piktogrammen versehen.

In der Zeichnung zeigt:
- Figur 1: einen Längsschnitt durch ein vollständig installiertes Anschlussstück,
- Figur 2: eine Seitenansicht des Siebes,
- Figur 3: einen Längsschnitt durch das Sieb entlang der Schnittlinie III-III von Fig. 2,
- Figur 4: eine Ansicht des Siebes von unten,
- Figur 5: einen Längsschnitt durch das Sieb entlang der Schnittlinie V-V von Fig. 4,
- Figur 6: eine Draufsicht auf das Sieb (Montagerichtung), und
- Figur 7: einen das Anschlussstück enthaltenden Montagsatz.

In der Zeichnung weisen dieselben konstruktiven Elemente jeweils dieselbe Bezugsziffer auf.

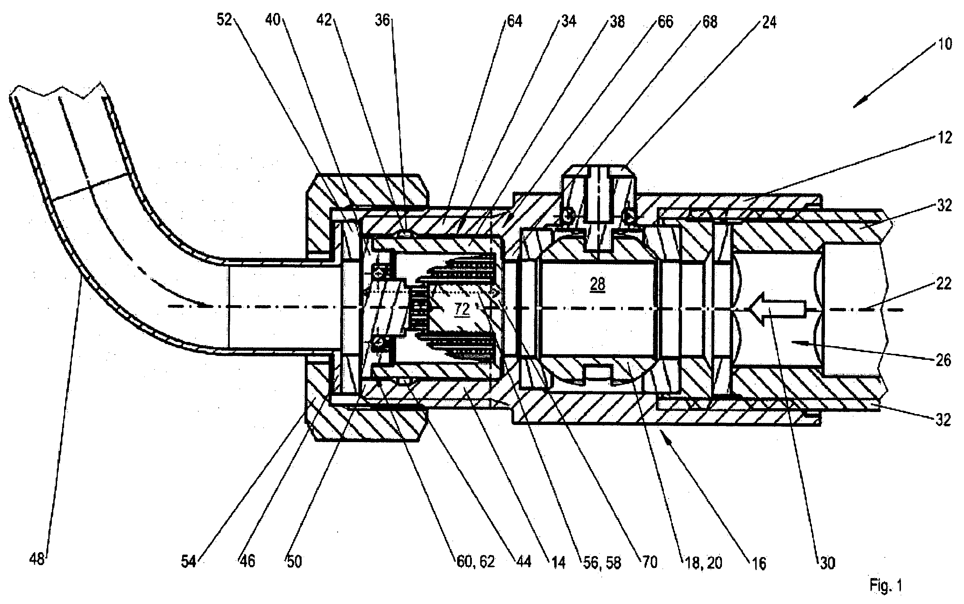

Die Fig. 1 illustriert einen Längsschnitt durch ein vollständig installiertes Anschlussstück.

Das Anschlussstück 10 umfasst unter anderem einen Einlassstutzen 12 und einen Auslassstutzen 14, zwischen denen ein Mittelabschnitt 16 mit einem Absperrorgan 18 angeordnet ist, das hier lediglich exemplarisch als ein Kugelventil 20 ausgeführt ist. Der Einlassstutzen 12, der Auslassstutzen 14 sowie das Absperrorgan 18 bzw. das Kugelventil 20 liegen jeweils zentrisch auf einer gemeinsamen Längsmittelachse 22. Das Kugelventil 20 verfügt über ein Betätigungsglied 24 zum Öffnen und Schließen durch einen Anwender und bildet in der hier gezeigten, vollständig geöffneten Stellung zusammen mit dem Einlassstutzen 12 und dem Auslassstutzen 14 einen rohrförmigen Fluidkanal 26 mit einem annähernd konstanten Innendurchmesser, durch den ein Fluid 28, wie z. B. Wasser, mit der Strömungsrichtung 30 hindurch fließt. Der Einlassstutzen 12 des Anschlussstücks 10 ist auf einen fluidführenden Wandnippel 32 aufgeschraubt, bei dem es sich um einen in der Haustechnik üblicherweise verwendeten Wandauslass von 1/2" oder 3/4" mit einem Außengewinde für Kaltwasser handelt. Die notwendige Abdichtung zwischen dem Einlassstutzen 12 und dem Wandnippel 32 kann z. B. durch Einhanfen erfolgen. Das Betätigungsglied 24 des Kugelventils 20 kann mit der Hand oder mittels eines geeigneten Werkzeugs durch den Anwender betätigbar sein.

Der Auslassstutzen 14 verfügt über einen näherungsweise zylindrischen Sitz 34 mit einer innenseitig umlaufenden Ringnut 36. Der Sitz 34 kann auf einfache Art und Weise durch das Einbringen einer zylindrischen Bohrung in den Auslassstutzen 14 hergestellt werden. In dem Sitz 34 sind ein in etwa hohlzylindrisches Sieb 38 sowie ein diesem stromabwärts folgender ungefähr scheibenförmiger Durchflussbegrenzer 40 aufgenommen. In die Ringnut 36 sind mindestens zwei integral zum Sieb 38 ausgebildete Rastzungen 42, 44 eingerastet, wodurch das Sieb 38 unverlierbar in der in Fig. 1 dargestellten Lage gesichert ist und insbesondere nicht unkontrolliert aus dem Auslassstutzen 14 herausfallen kann. Sowohl das Sieb 38 als auch der Durchflussbegrenzer 40 sind bevorzugt mit Polyoxymethylen (POM) hergestellt, wobei insbesondere die Fertigung des Siebes 38 aus POM im Vergleich zu konventionellen metallischen Topfsieben eine signifikante Kostenreduktion ermöglicht. Eine Maschenweite des Siebes 38 ist so bemessen, dass in der öffentlichen Wasserversorgung häufiger vorkommende Fremdpartikel, wie insbesondere größere Sandkörner und kleine Kieselsteine, sicher zurückgehalten werden. Der Einlassstutzen 12 und der Auslassstutzen 14 sowie der Mittelabschnitt 16 sind mit einer Metalllegierung, wie zum Beispiel Messing, gebildet.

Zwischen einem Flansch 46 eines Zulaufrohrs 48 eines nicht dargestellten Durchlauferhitzers und einer Stirnfläche 50 des Auslassstutzens 14 liegt ein Dichtring 52. Der Flansch 46 des Zulaufrohrs 48 dient hierbei als Anschlag für eine von hinten auf das Zulaufrohr 48 aufgeschobene Überwurfmutter 54. Durch zumindest handfestes Anziehen der Überwurfmutter 54 auf dem Auslassstutzen 14 wird der Dichtring 52 zwischen dem Flansch 46 des Zulaufrohres 48 und der Stirnfläche 50 des Auslassstutzens 14 in axialer Richtung unter Schaffung der notwendigen Abdichtung mechanisch fest eingespannt. In Abhängigkeit von ihrer axialen Gesamterstreckung können ggfls. das Sieb 38 und der Durchflussbegrenzer 40 beim Festziehen der Überwurfmutter 54 mit dem Sitz 34 axial verspannt werden.

Der Dichtring 52 ist bevorzugt mit einem bei einem Fluidkontakt aufquellenden Papierdichtungsmaterial, wie z. B. Centellen^{®} gebildet, kann alternativ aber auch mit einem beliebigen, hinreichend polymeren Material, wie zum Beispiel einer Gummimischung, gebildet sein. Das selbstaufquellende Papierdichtungsmaterial hat insbesondere den Vorteil, dass Unebenheiten und/oder Oberflächenbeschädigungen der Dichtflächen ausgeglichen werden, so dass weitgehend unabhängig vom Anzugsmoment des Anwenders stets eine ausreichende Abdichtungswirkung erreichbar ist. Dies wird dadurch erreicht, dass etwaig in geringen Mengen austretendes Wasser den Dichtring 52 aufquellen lässt, was zu einer erhöhten axialen Verspannung des Dichtrings 52 und damit einhergehend zur hermetischen Abdichtung zwischen dem Zulaufrohr 48 und dem Auslassstutzen 14 des Anschlussstücks 10 führt. Unkontrollierte Geometrieänderungen des Dichtrings 52, wie z. B. Quetschungen, Stauchungen oder dergleichen, infolge eines zu hohen Anzugsmomentes der Überwurfmutter 54 und hierdurch bedingte Scherbewegungen des Dichtrings 52, die zu Undichtigkeiten führen können, werden hierdurch zuverlässig vermieden.

Eine Gesamtlänge 56 des Siebes 38 und des Durchflussbegrenzers 40 ist kleiner oder gleich einer Tiefe 58 des Sitzes 34 im Auslassstutzen 14. Mittels eines umlaufenden Rezesses 60 ist der Durchflussbegrenzer 40 an einem ersten Endabschnitt 62 eines hohlzylindrischen Mantels 64 des Siebes 38 gehalten und zugleich zentriert. Ein hiervon weggerichteter zweiter Endabschnitt 66 des Mantels 64 des Siebes 38 liegt im Idealfall vollflächig an einem Anschlag 68 des Sitzes 34 an. Ein der besseren zeichnerischen Übersicht halber nicht bezeichneter Innendurchmesser des kreisringförmigen Anschlags 66 entspricht näherungsweise dem Strömungsquerschnitt des Kugelventils 20 im geöffneten Zustand.

Am zweiten Endabschnitt 66 des Mantels 64 des Siebs 38 sind ein Quersteg 70 sowie ein quaderförmiger Vorsprung 72 ausgebildet. Durch diesen Vorsprung 72 kann das Sieb 38 im Wartungsfall beispielsweise mit einer Spitzzange leicht ergriffen werden und in der Strömungsrichtung 30 aus dem Auslassstutzen 14 entgegen der Sperrwirkung der Rastzungen 42, 44 herausgezogen werden, nachdem vorab das Zulaufrohr 48 gelöst und der Durchflussbegrenzer 40 herausgenommen wurde.

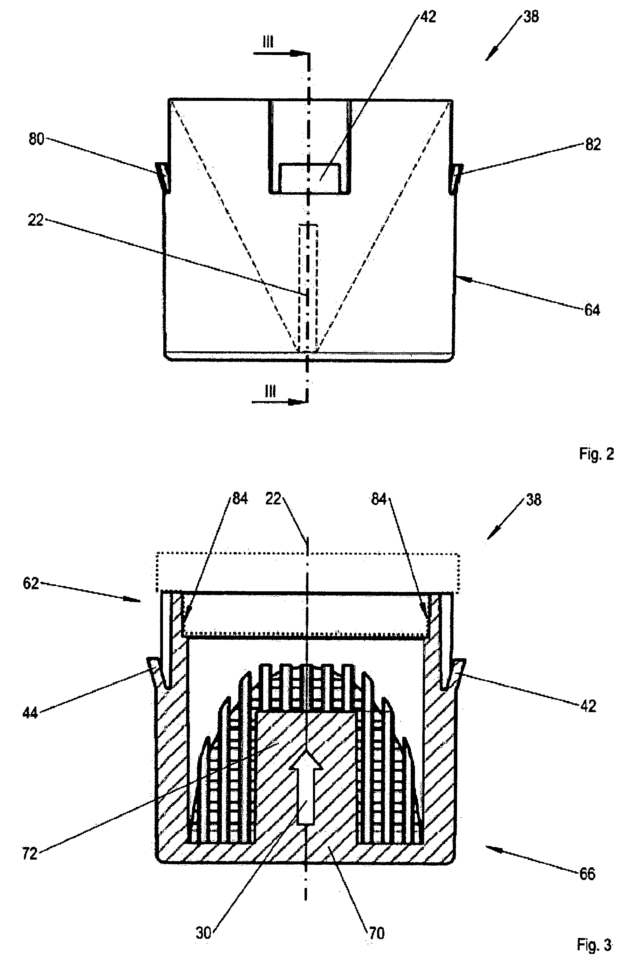

Die Fig. 2 bis 6 zeigen unterschiedliche Ansichten und Schnittdarstellungen des Siebes von Fig. 1.

Ausweislich der Fig. 2 verfügt das Sieb 38 über den hohlzylindrischen Mantel 64, der bevorzugt unter leichtem Spiel im Sitz des Auslassstutzens aufgenommen ist. Darüber hinaus sind die Rastzunge 42, zwei weitere Rastzungen 80, 82 und die Längsmittelachse 22 eingezeichnet.

Nach Maßgabe des in Fig. 3 illustrierten Längsschnittes durch das Sieb 38 ist im Bereich des ersten Endabschnittes 62 ein weiterer Rezess 84 mit geringer Einstichtiefe eingelassen, der zur Aufnahme des lediglich mit einer punktierten Linie angedeuteten Durchflussbegrenzers dient. Im Bereich des zweiten Endabschnittes 66 verläuft der Quersteg 70, an dem der in Strömungsrichtung weisende Vorsprung 72 ausgebildet ist.

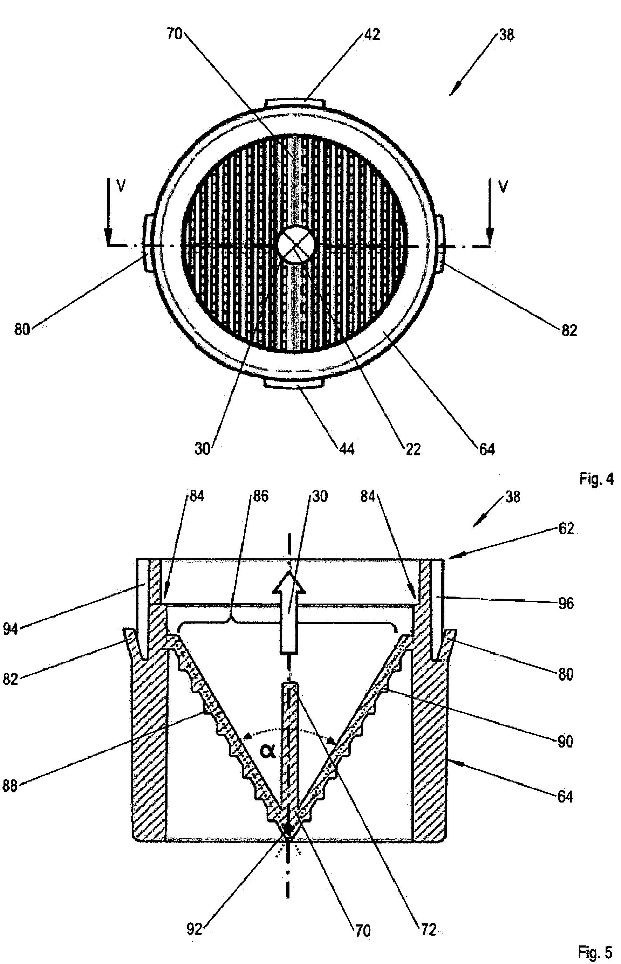

Fig. 4 zeigt eine Ansicht des Siebes 38 von unten, d.h. die Strömungsrichtung 30 des Fluids weist entlang der Längsmittelachse 22 in die Zeichenebene hinein. Die vier Rastzungen 42, 44, 80, 82 sind jeweils um 90 Grad zueinander versetzt über den Umfang des Mantels 64 des Siebes 38 hinweg verteilt angeordnet. Der Quersteg 70 erstreckt sich über den gesamten Durchmesser des Mantels 64 hinweg und verläuft hierbei senkrecht zur Längsmittelachse 22.

Fig. 5 zeigt eine Querschnittsdarstellung entlang der Schnittlinie V-V aus Fig. 4 durch das Sieb 38, das über eine näherungsweise V-förmig ausgebildete Wirkfläche 86, die mit zwei unter einem Winkel α von hier exemplarisch 60° zueinander geneigten Siebflächen 88, 90 gebildet ist. Die Siebflächen 88, 90 gehen vom ersten Endabschnitt 62 des Mantels 64 des Siebes 38 aus und laufen entgegen der Strömungsrichtung 30 im Bereich des zweiten Endabschnittes des Mantels 64 zu einer gedachten Scheitellinie 92 im Bereich des Querstegs 70 zusammen. Der erste Endabschnitt 62 verfügt ferner über Taschen 94, 96, in die die Rastzungen 80, 82 beim Einführen des Siebes 38 in den Sitz des Anschlussstutzens einfedern können, so dass sich das Sieb 38 leichtgängig in den Auslassstutzen einsetzen lässt.

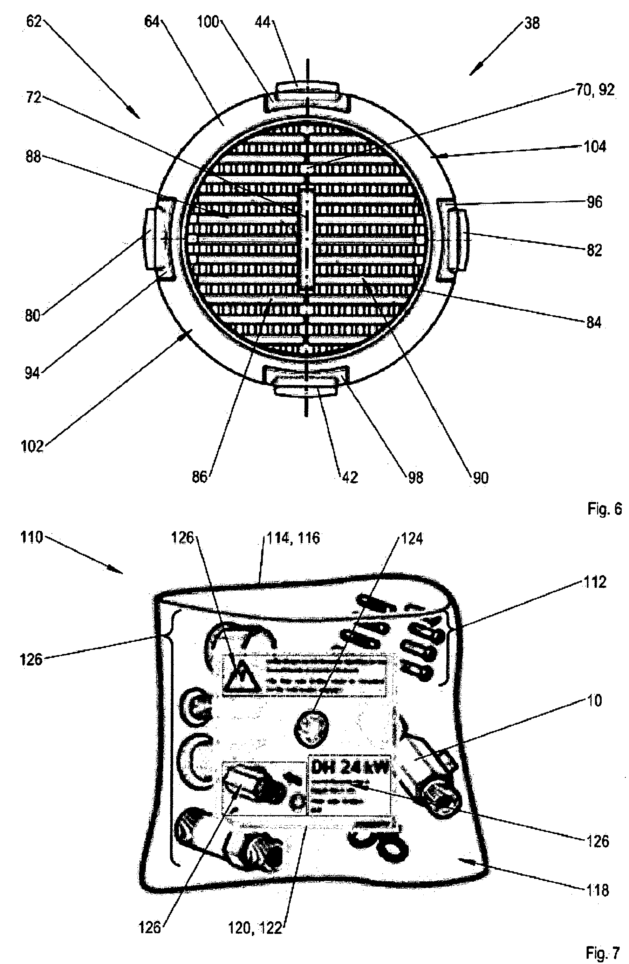

Die Fig. 6 zeigt eine Draufsicht auf das Sieb 38 in der Montagerichtung. In der Darstellung sind die vier Rastzungen 42, 44, 80, 82 mit ihren zugehörigen Taschen 94, 96 sowie 98, 100 sichtbar. Abweichend von den hier lediglich beispielhaft dargestellten vier Rastzungen 42, 44 ,80, 82 mit den zugehörigen vier Taschen 94 bis 100 kann eine hiervon abweichende Anzahl vorgesehen sein, wobei jedoch mindestens zwei Rastzungen sowie mindestens zwei zugeordnete Taschen vorzusehen sind. Auch kann der Winkelversatz zwischen den Rastzungen 42, 44, 80, 82 von den hier lediglich exemplarisch gezeigten 90° abweichen. Ferner ist die Wirkfläche 86 des Siebes 38 mit ihren beiden satteldachförmig in den Steg 70 zusammenlaufenden Siebflächen 88, 90 sowie dem aus der Zeichenebene herausragenden quaderförmigen Vorsprung 72 zum vorzugsweisen Ergreifen des Siebes 38 mit Hilfe einer nicht eingezeichneten Spitzzange dargestellt. Die in die Zeichenebene hinein entgegengesetzt zueinander geneigten Siebflächen 88, 90 gehen von diametral gegenüberliegenden, jeweils halbreisförmigen Abschnitten 102, 104 im Bereich des ersten Endabschnitts 62 aus und laufen in der Scheitellinie 92 im Bereich des Querstegs 70 zusammen, der im Bereich des zweiten Endabschnitts 66 des Siebes 38 liegt. Am ersten Endabschnitt 62 befindet sich ferner der Rezess 84 zur zentrierenden Lagesicherung des hier nicht eingezeichneten Durchflussbegrenzers.

Unbeschadet der bevorzugten Anwendung des erfindungsgemäßen Anschlussstücks 10 zur Verbindung mit einem Wandauslass eines häuslichen Kaltwasserversorgungsnetzes kann das Anschlussstück 10 auch zur Wassereinspeisung in andere Elektrogeräte dienen.

Die Fig. 7 zeigt einen erfindungsgemäßen Montagesatz für die vereinfachte Installation eines Warmwasserhaushaltsgeräts, wie z. B. einen Durchlauferhitzer, bei dem dieses mit einem Wandnippel zu verbinden ist, der ein Fluid führt.

Ein Montagesatz 110 enthält neben dem erfindungsgemäßen Anschlussstück 10 eine Vielzahl weiterer Komponenten 112, wie z. B. Schrauben, Bolzen, Unterlegscheiben, Fächerscheiben, Dübel, Gewindenippel, Zwischenstücke, Gewindehülsen, Hülsen, Stützen, Tüllen, Adapter, Dichtringe, Dichtmittel, Siebe, Einsätze, Hilfswerkzeuge etc., die für den fachgerechten Wandanschluss eines Haushaltsgerätes, insbesondere eines Durchlauferhitzers, an einen Wandnippel notwendig sind. Die Komponenten 112 sind in einer Verpackung 114 enthalten, bei der es sich hier beispielhaft um einen bevorzugt durchsichtigen Folienbeutel 116, eine Papiertasche oder dergleichen handelt. Auf einer Außenseite 118 des Folienbeutels 116 befindet sich eine Zusatzverpackung 120, die hier mit einem transparenten Aufkleber 122 gebildet ist, der zur Lagefixierung mindestens eines weiteren Durchflussbegrenzers 124 auf der Außenseite der Verpackung 114 dient. In einer Fertigungslinie des Durchlauferhitzers oder eines beliebigen anderen Warmwassergeräts wird zu diesem Zweck der Durchflussbegrenzer 124 zunächst auf eine Rückseite des Aufklebers 122 aufgebracht. Diese, der Verpackung 114 bzw. dem Folienbeutel 116 zugewandte Rückseite des Aufklebers ist hierzu zumindest bereichsweise adhäsiv bzw. selbstklebend ausgerüstet bzw. mit einem geeigneten Klebemittel versehen. Abschließend wird der Aufkleber 122 zusammen mit dem daran anhaftenden Durchflussbegrenzer 124 außenseitig auf die Verpackung 114 mit aufgeklebt.

Der Durchflussbegrenzer 124 kann so ausgebildet sein, dass dieser z. B. im Vergleich zu dem werksseitig in das Anschlussstück 10 eingesetzten Durchflussbegrenzer nur noch eine reduzierte Durchflussmenge des Fluids zulässt. Der Durchflussbegrenzer 124 kann im Vergleich zum Durchflussbegrenzer 40 (vgl. insb. Fig. 1) eine in weiten Grenzen veränderte Durchflussmenge - einschließlich eines ungehinderten Durchlasses - des Fluids erlauben, um für einen Installateur eine leichte und schnelle Anpassung an unterschiedlichste Gegebenheiten des Montageortes, insbesondere an einen unterschiedlich hohen Fluiddruck bzw. Wasserdruck z. B. als Folge der Gebäudehöhe oder dergleichen, zu ermöglichen. Für den Fall, dass der Durchflussbegrenzer 40 den ungehinderten Durchtritt des Fluids erlaubt, hat dieser lediglich die Funktion eines Zwischenlegers bzw. eines Distanzrings zwischen dem Dichtring 52 und dem Sieb 38 innerhalb des Anschlussstücks 10 inne (vgl. Fig. 1).

Um einem Installateur bzw. einem Benutzer die Handhabung des integrierten Montagesatzes 110 weiter zu erleichtern, sind die Verpackung 114 und/oder der transparente Aufkleber 122 bevorzugt mit Montagehinweisen 126 in Textform und/oder in Piktogramm- bzw. Symbolform versehen.

Darüber hinaus sind zur leichteren Erkennbarkeit des Inhalts sowohl die Verpackung 114 als auch der rückseitig zumindest bereichsweise adhäsiv bzw. selbstklebend ausgebildete Aufkleber 122 vorzugsweise zumindest teilweise mit einem transparenten Kunststoffmaterial gebildet.

**Bezugszeichenliste**

| | | | |
|---|---|---|---|
| 10. | Anschlussstück | 64. | Mantel (Sieb) |
| 12. | Einlassstutzen | 66. | zweiter Endabschnitt (Sieb) |
| 14. | Auslassstutzen | 68. | Anschlag (Sitz) |
| 16. | Mittelabschnitt | 70. | Quersteg (Sieb) |
| 18. | Absperrorgan | 72. | Vorsprung |
| 20. | Kugelventil | 80. | Rastzunge (Sieb) |
| 22. | Längsmittelachse | 82. | Rastzunge (Sieb) |
| 24. | Betätigungsglied (Kugel-V.) | 84. | Rezess (Sieb) |
| 26. | Fluidkanal | 86. | Wirkfläche (Sieb) |
| 28. | Fluid (Wasser) | 88. | Siebfläche (Wirkfläche) |
| 30. | Strömungsrichtung (Fluid) | 90. | Siebfläche (Wirkfläche) |
| 32. | Wandnippel | 92. | Scheitellinie (Siebflächen) |
| 34. | Sitz (Auslassstutzen) | 94. | Tasche |
| 36. | Ringnut (Auslassstutzen) | 96. | Tasche |
| 38. | Sieb | 98. | Tasche |
| 40. | Durchflussbegrenzer | 100. | Tasche |
| 42. | Rastzunge (Sieb) | 102. | Abschnitt (Mantel, Sieb) |
| 44. | Rastzunge (Sieb) | 104. | Abschnitt (Mantel, Sieb) |
| 46. | Flansch (Zulaufrohr) | 110. | Montagesatz |
| 48. | Zulaufrohr | 112. | Komponenten |
| 50. | Stirnfläche | 114. | Verpackung |
| 52. | Dichtring | 116. | Folienbeutel (Verpackung) |
| 54. | Überwurfmutter | 118. | Außenseite |
| 56. | Gesamtlänge (Sieb+Begrenzer) | 120. | Zusatzverpackung |
| 58. | Tiefe (Sitz) | 122. | Aufkleber |
| 60. | Rezess (Durchflussbegrenzer) | 124. | Durchflussbegrenzer |
| 62. | erster Endabschnitt (Sieb) | 126. | Montagehinweis(e) |

## Patentansprüche

1. Anschlussstück (10) zum Verbinden eines Haushaltsgerätes, insbesondere eines Durchlauferhitzers, mit einem ein Fluid führenden Wandnippel (32), wobei das Anschlussstück (10) einen Ein- und Auslassstutzen (12, 14) aufweist, die durch einen Mittelabschnitt (16) mit einem Absperrorgan (18), insbesondere einem Kugelventil (20), verbunden sind, wobei das Anschlussstück (10) mittels des Einlassstutzens (12) auf den Wandnippel (32) aufschraubbar ist, wobei in einem Sitz (34) des Auslassstutzens (14) ein Sieb (38) aufgenommen ist, wobei das Sieb (38) durch mindestens zwei Rastzungen (42, 44, 80, 82) mit dem Sitz (34) des Auslassstutzens (14) verrastet ist,
**dadurch gekennzeichnet, dass**
ein Flansch (46) eines Zulaufrohrs (48) des Haushaltgerätes mittels einer auf den Auslassstutzen (14) aufschraubbaren Überwurfmutter (54) mit diesem verbindbar ist und zwischen dem Flansch (46) und einer Stirnfläche (50) des Auslassstutzens (14) ein Dichtring (52) angeordnet ist
und dass in dem Sitz (34) des Auslassstutzens (14) ein Durchflussbegrenzer (40) aufgenommen ist.

2. Anschlussstück (10) nach Anspruch 1, **dadurch gekennzeichnet, dass** das Sieb (38) und der Durchflussbegrenzer (40) mit einem thermoplastischen Kunststoffmaterial, insbesondere mit Polyoxymethylen, gebildet sind.

3. Anschlussstück (10) nach Anspruch 1 oder 2, **dadurch gekennzeichnet, dass** der Dichtring (52) mit einem bei Fluidkontakt aufquellenden Papierdichtungsmaterial und/oder mit einem Kunststoffmaterial gebildet ist.

4. Anschlussstück (10) nach einem der Ansprüche 1 bis 3; **dadurch gekennzeichnet, dass** der Sitz (34) im Auslassstutzen (14) näherungsweise zylindrisch ausgebildet ist und eine Ringnut (36) aufweist, in die die mindestens zwei radial nach außen abgespreizten Rastzungen (42, 44, 80, 82) des Siebes (38) zumindest bereichsweise formschlüssig einbringbar sind.

5. Anschlussstück (10) nach einem der Ansprüche 1 bis 4, **dadurch gekennzeichnet, dass** eine Gesamtlänge (56) von Sieb (38) und Durchflussbegrenzer (40) kleiner oder gleich einer Tiefe (58) des Sitzes (34) im Auslassstutzen (14) ist.

6. Anschlussstück (10) nach einem der Ansprüche 1 bis 5, **dadurch gekennzeichnet, dass** der Durchflussbegrenzer (40) näherungsweise scheibenförmig ausgebildet ist und einen umlaufenden Rezess (60) aufweist, der in Richtung des Absperrorgans (18) weist.

7. Anschlussstück (10) nach Anspruch 6, **dadurch gekennzeichnet, dass** der Rezess (60) des Durchflussbegrenzers (40) auf einem zweiten Endabschnitt (66) des Siebes (38) zumindest bereichsweise formschlüssig aufgenommen ist.

8. Anschlussstück (10) nach einem der Ansprüche 1 bis 5, **dadurch gekennzeichnet, dass** das Sieb (38) einen fluiddichten und im Wesentlichen hohlzylindrischen Mantel (64) aufweist, an dessen ersten in Richtung des Absperrorgans (18) weisenden Endabschnitt (62) ein Quersteg (70) ausgebildet ist.

9. Anschlussstück (10) nach Anspruch 8, **dadurch gekennzeichnet, dass** am Quersteg (70) des Siebes (38) mittig ein Vorsprung (72) mit einer rechteckförmigen Querschnittsgeometrie ausgebildet ist.

10. Anschlussstück (10) nach einem der Ansprüche 8 oder 9, **dadurch gekennzeichnet, dass** eine Wirkfläche (86) des Siebes (38) zwei V-förmig zueinander angeordnete Siebflächen (88, 90) aufweist, die von diametral gegenüberliegenden Abschnitten (102, 104) des ersten Endabschnitts (62) des Mantels (64) ausgehen und die in einer gemeinsamen Scheitellinie (92) im Bereich des Querstegs (70) zusammenlaufen.

11. Montagesatz für ein Haushaltsgerät, insbesondere einen Durchlauferhitzer, umfassend mindestens ein Anschlussstück (10) nach Maßgabe mindestens eines der Ansprüche 1 bis 10, sowie weitere zur Installation des Anschlussstücks (10) benötigte Komponenten (112), **dadurch gekennzeichnet, dass** das mindestens eine Anschlussstück (10) in einer dem Haushaltsgerät beiliegenden Verpackung (114), insbesondere einem transparenten Folienbeutel (116), enthalten ist, und im Bereich einer Außenseite (118) der Verpackung (114) mindestens eine Zusatzverpackung (120), insbesondere mindestens ein Aufkleber (122), zur Lagefixierung mindestens eines weiteren Durchflussbegrenzers (124) für das Anschlussstück (10) an der Verpackung (114) vorgesehen ist.

## Claims

1. Connecting piece (10) for connecting a domestic appliance, in particular a flow-through water heater, to a wall fitting (32) conducting a fluid, wherein the connecting piece (10) has an inlet and outlet nozzle (12, 14), which are connected by a central segment (16) to a shut-off device (18), in particular a spherical valve (20), wherein the connecting piece (10) can be screwed onto the wall fitting (32) by means of the inlet nozzle (12), wherein a filter (38) is received in a seat (34) of the outlet nozzle (14), wherein the filter (38) is locked to the seat (34) of the connecting piece (14) by means of at least two detents (42, 44, 80, 82), **characterised in that**
a flange (46) of a supply pipe (48) of the domestic appliance can be connected hereto by means of a union nut (54) which can be screwed onto the outlet nozzle (14) and a sealing ring (52) is arranged between the flange (46) and an end face (50) of the outlet nozzle (14) and that a flow rate limiter (40) is received in the seat (34) of the outlet nozzle (14).

2. Connecting piece (10) according to claim 1, **characterised in that** the filter (38) and the flow rate limiter (40) are formed with a thermoplastic plastic material, in particular polyoxymethylene.

3. Connecting piece (10) according to claim 1 or 2, **characterised in that** the sealing ring (52) is formed with a paper packing material which swells upon contact with fluid and/or with a plastic material.

4. Connecting piece (10) according to one of claims 1 to 3, **characterised in that** the seat (34) in the outlet nozzle (14) is embodied approximately cylindrically and has an annular groove (36), into which the at least two detents (42, 44, 80, 82) of the filter (38) which are strutted apart radially outwards can be introduced in a form-fit matter at least in regions.

5. Connecting piece (10) according to one of claims 1 to 4, **characterised in that** an overall length (56) of the filter (38) and the flow rate limiter (40) is less than or equal to a depth (58) of the seat (34) in the outlet nozzle (14).

6. Connecting piece (10) according to one of claims 1 to 5, **characterised in that** the flow rate limiter (40) is embodied in an approximately disk-shaped manner and has a peripheral recess (60), which points in the direction of the shut-off device (18).

7. Connecting piece (10) according to claim 6, **characterised in that** the recess (60) of the flow rate limiter (40) is received in a form-fit manner at least in regions of a second end segment (66) of the filter (38).

8. Connecting piece (10) according to one of claims 1 to 5, **characterised in that** the filter (38) has a fluid-tight and essentially hollow-cylindrical casing (64), on which first end segment (62) pointing in the direction of the shut-off device (18) a transverse web (70) is embodied.

9. Connecting piece (10) according to claim 8, **characterised in that** a protrusion (72) with a rectangular cross-sectional geometry is embodied centrally on the transverse web (70) of the filter (38).

10. Connecting piece (10) according to one of claims 8 or 9, **characterised in that** an effective surface (86) of the filter (38) has two V-shaped filter surfaces (88, 90) arranged relative to one another, which emanate from diametrically opposing segments (102, 104) of the first end segment (62) of the casing (64) and which, in a shared crown line (92), merge together in the region of the transverse web (70).

11. Assembly set for a domestic appliance, in particular a flow-through water heater, comprising at least one connecting piece (10) in accordance with at least one of claims 1 to 10, as well as further components (112) required for installation of the connecting piece (10), **characterised in that** the at least one connecting piece (10) is connected in a packaging (114) attached to the domestic appliance, in particular a transparent plastic bag (116), and in the region of an exterior (118) of the packaging (114) at least one additional packaging (120), in particular at least one adhesive label (122) for fixing the position of at least one further flow rate limiter (124) for the connecting piece (10) on the packaging (114).

## Revendications

1. Pièce de raccordement (10) destinée à relier un appareil ménager, en particulier un chauffe-eau instantané, à un raccord mural (32) d'amenée de fluide, dans lequel la pièce de raccordement (10) présente un embout d'entrée et un embout de sortie (12, 14) reliés à un organe de fermeture (18), en particulier un clapet à bille (20), grâce à une section médiane (16), dans laquelle la pièce de raccordement (10) peut être vissée sur le raccord mural (32) au moyen de l'embout d'entrée (12), dans laquelle une pommelle (38) est accueillie dans un logement (34) de l'embout de sortie (14), dans laquelle la pommelle (38) est encliquetée dans le logement (34) de l'embout de sortie (14) grâce à au moins deux pattes d'encliquetage (42, 44, 80, 82),
**caractérisée en ce que**
une bride (46) d'un tuyau d'arrivée (48) de l'appareil ménager peut être reliée à ladite pièce au moyen d'un écrou à chapeau (54) pouvant être vissé sur l'embout de sortie (14) et un anneau d'étanchéité (52) est agencé entre la bride (46) et une surface avant (50) de l'embout de sortie (14)
et un limiteur de débit (40) est accueilli dans le logement (34) de l'embout de sortie (14).

2. Pièce de raccordement (10) selon la revendication 1, **caractérisée en ce que** la pommelle (38) et le limiteur de débit (40) sont formés d'un matériau synthétique thermoplastique, en particulier de polyoxyméthylène.

3. Pièce de raccordement (10) selon la revendication 1 ou 2, **caractérisée en ce que** l'anneau d'étanchéité (52) est formé d'un matériau d'étanchéité en papier, qui gonfle au contact d'un fluide, et/ou d'une matière synthétique.

4. Pièce de raccordement (10) selon l'une quelconque des revendications 1 à 3, **caractérisée en ce que** le logement (34) est situé dans l'embout de sortie (14) est réalisé de manière approximativement cylindrique et présente une gorge annulaire (36), dans laquelle les au moins deux pattes d'encliquetage (42, 44, 80, 82), s'étendant radialement vers l'extérieur, de la pommelle (38) peuvent être insérées au moins par secteur avec complémentarité de forme.

5. Pièce de raccordement (10) selon l'une quelconque des revendications 1 à 4, **caractérisée en ce qu'**une longueur totale (56) de la pommelle (38) et du limiteur de débit (40) est inférieure ou égale à une profondeur (58) du logement (34) dans l'embout de sortie (14).

6. Pièce de raccordement (10) selon l'une quelconque des revendications 1 à 5, **caractérisée en ce que** le limiteur de débit (40) est réalisé de manière approximativement discoïde et présente un renfoncement périphérique (60) orienté dans la direction de l'organe de blocage (18).

7. Pièce de raccordement (10) selon la revendication 6, **caractérisée en ce que** le renfoncement (60) du limiteur de débit (40) est accueilli au moins par secteur avec complémentarité de forme sur une deuxième section terminale (66) de la pommelle (38).

8. Pièce de raccordement (10) selon l'une quelconque des revendications 1 à 5, **caractérisée en ce que** la pommelle (38) présente une enveloppe (64) étanche aux fluides et essentiellement cylindrique creuse, au niveau de la première section terminale (62), orientée en direction de l'organe de blocage (18), de laquelle est réalisé un élément transversal (70).

9. Pièce de raccordement (10) selon la revendication 8, **caractérisée en ce qu'**une partie saillante (72) ayant une géométrie de section rectangulaire est réalisée au milieu de l'élément transversal (70) de la pommelle (38).

10. Pièce de raccordement (10) selon la revendication 8 ou 9, **caractérisée en ce qu'**une surface active (86) de la pommelle (38) présente deux surfaces de pommelle (88, 90) agencées en V l'une par rapport à l'autre, qui s'écartent des sections (102, 104) diamétralement opposées de la première section terminale (62) de l'enveloppe (64) et qui convergent vers une ligne de crête (92) commune dans le secteur de l'élément transversal (70).

11. Bloc à monter pour un appareil ménager, en particulier un chauffe-eau instantané, comprenant au moins une pièce de raccordement (10) selon les spécifications d'au moins une des revendications 1 à 10, ainsi que d'autres composants (112) nécessaires pour l'installation de la pièce de raccordement (10), **caractérisé en ce que** la au moins une pièce de raccordement (10) est contenue dans un conditionnement (114) joint à l'appareil ménager, en particulier un sachet transparent (116), et est munie, dans la région d'un côté extérieur (118) du conditionnement (114), d'au moins un conditionnement supplémentaire (120), en particulier au moins un autocollant (122), servant à fixer en position sur ledit conditionnement (114) au moins un autre limiteur de débit (124) destiné à la pièce de raccordement (10).
